# DEMANDE DE BREVET EUROPEEN

(11) **EP 3 800 106 A1**
(43) Date de publication de la demande: **07.04.2021**
(21) Numéro de dépôt: 20199524.8
(22) Date de dépôt: 01.10.2020
(51) Int. Cl.: B61H 13/04, B61H 13/26, B61H 15/00, B60T 17/22, B61H 13/24, F16D 65/28, F16D 65/14

(54) **SYSTEME DE FREINAGE MECANIQUE INTEGRE A UN BOGIE DE WAGON DE TRANSPORT DE MARCHANDISES**

(30) Priorité: 03.10.2019 FR 1910953
(71) Demandeur: C.G.L., 53960 Bonchamp-lès-Laval (FR)
(72) Inventeur: LELASSEUX, Gérard, 53960 Bonchamp-lès-Laval (FR)
(74) Mandataire: Oudin, Stéphane

(57) **Abrégé**

La présente invention a pour objet un système de freinage (1) intégré à un bogie d'un wagon de transport de marchandises comportant au moins deux essieux remarquable en ce qu'il est exclusivement mécanique et comporte un carter (2) mobile en translation et contenant au moins en partie :
- un actionneur principal (3) simple effet actionné par de l'air comprimé et comportant un piston (31) associé à un ressort de rappel (32) et entrainant en translation une crémaillère (34),
- un dispositif d'amplification d'effort (4),
- un premier porte-semelle de frein (7) apte, lors du freinage, à venir en appui sur une roue (8) du premier essieu du bogie, et
- un deuxième porte-semelle de frein (9) apte, lors du freinage, à venir au contact d'une roue (10) du deuxième essieu du bogie disposée du même côté que la roue (8) dudit premier essieu.

## Description

### Domaine technique de l'invention

La présente invention concerne le domaine général des bogies notamment destinés à assurer le maintien de wagons de transport de marchandises et, plus particulièrement, un système de freinage mécanique intégré audit bogie.

### Etat de la technique

Dans le domaine du transport de marchandise par voies ferrées, il est connu d'utiliser des bogies, dont la structure est classiquement constituée de longerons réunis au voisinage de leur milieu par une traverse pivot, avec système de freinage pour le maintien des wagons.

De manière classique, ce type de bogie est muni d'un système de freinage selon l'un des modes de réalisation suivants :
- un système de freinage actionné depuis le wagon grâce à un actionneur (cylindre et piston actionnés par de l'air comprimé) et une timonerie adaptée supportant et mettant en mouvement des semelles de frein disposées de part et d'autre de chacune des roues des essieux, ou
- un système de freinage, dit intégré, actionné depuis le wagon grâce à de l'air comprimé arrivant depuis ce dernier et deux actionneurs mettant en mouvement deux traverses de liaison disposées de part et d'autre de la traverse pivot du bogie et supportant des semelles de frein venant s'appliquer sur un seul côté des roues du bogie lors du freinage, lesdits actionneurs et traverses de liaison étant disposés dans le bogie.

Le système de freinage intégré de bogie est classiquement de conception plus simple que l'autre mode de réalisation. Toutefois, il n'en demeure pas moins que ce type de système de freinage peut rapidement devenir complexe si on lui ajoute des équipements complémentaires tels que, par exemple, un dispositif de freinage manuel ou encore un dispositif de rattrapage du jeu généré par l'usure des roues et des semelles de frein.

### Résumé de l'invention

Le but de la présente invention est donc de pallier les inconvénients précédemment cités et de proposer un système de freinage intégré avec rattrapage de j eu de conception simple exclusivement mécanique, facile à mettre en œuvre et garantissant un freinage pérenne.

Conformément à l'invention, il est donc proposé un système de freinage intégré à un bogie d'un wagon de transport de marchandises comportant au moins deux essieux caractérisé en ce qu'il est exclusivement mécanique et comporte un carter mobile en translation et contenant au moins en partie :
- un actionneur principal simple effet actionné par de l'air comprimé et comportant un piston associé à un ressort de rappel et entrainant en translation une crémaillère,
- un dispositif d'amplification d'effort,
- un premier porte-semelle de frein apte, lors du freinage, à venir en appui sur une roue du premier essieu du bogie, et
- un deuxième porte-semelle de frein apte, lors du freinage, à venir au contact d'une roue du deuxième essieu du bogie disposée du même côté que la roue dudit premier essieu,
ledit dispositif d'amplification d'effort comprenant au moins :
- un premier pignon monté pivotant sur le carter, entrainé en rotation par la crémaillère dudit actionneur principal et entrainant en rotation une roue libre,
- un deuxième pignon monté pivotant sur le carter, entrainé en rotation par ladite roue libre uniquement dans un seul sens de rotation, et
- une crémaillère entrainée en translation par ledit deuxième pignon par l'intermédiaire d'une rangée de premières dents.

Ledit dispositif d'amplification d'effort comporte avantageusement un troisième pignon monté pivotant sur ledit carter et entrainé en rotation par une rangée de deuxièmes dents de ladite crémaillère, le premier porte-semelle de frein étant disposé à l'extérieur dudit carter et solidaire de la crémaillère du dispositif d'amplification d'effort, et ledit deuxième porte-semelle de frein étant solidaire à l'extérieur dudit carter.

Ledit deuxième pignon du dispositif d'amplification d'effort est de préférence de plus petites dimensions que le premier pignon associé.

Selon un mode de réalisation avantageux, le système de freinage comprend un dispositif de rattrapage de jeu comportant au moins :
- un chariot mobile selon une direction parallèle à l'axe longitudinal de la crémaillère du dispositif d'amplification d'effort entre une position "normale" et une position "rattrapage", et étant associé à un premier ressort de rappel tendant à ramener ledit chariot dans la position "normale",
- une dent solidaire dudit chariot, mobile selon une direction perpendiculaire à l'axe longitudinal de la crémaillère du dispositif d'amplification d'effort entre une position "sortie" dans laquelle elle sort au moins en partie dudit chariot et une position "rentrée", et étant associé à un deuxième ressort de rappel tendant à ramener ladite dent dans la position "sortie", ladite dent coopérant, en position "sortie", avec une rangée de troisièmes dents de ladite crémaillère,
- une rainure s'étendant parallèlement à l'axe longitudinal de la crémaillère du dispositif d'amplification d'effort, recevant une portion de la dent située du côté opposé à ladite crémaillère de manière à guider et maintenir en position "sortie" ladite dent lors du déplacement du chariot, et comportant des premier et deuxième évidements disposés au droit de la position de la dent lorsque le chariot est respectivement dans sa position "normale" et sa position "rattrapage", lesdits premier et deuxième évidements autorisant le déplacement de la dent de sa position "sortie" vers sa position "rentrée",
- une came mobile par rapport au carter selon une direction parallèle à l'axe longitudinal de la crémaillère du dispositif d'amplification d'effort, comportant des première et deuxième découpes, et coopérant avec l'extrémité libre de la dent située du côté opposé à ladite crémaillère de manière à autoriser le déplacement de la dent de sa position "sortie" vers sa position "rentrée" lorsque le chariot est respectivement dans sa position "normale" ou sa position "rattrapage" et que l'extrémité libre de la dent coopère avec la première ou la deuxième découpe de la came, et
- un levier solidaire de ladite came et mobile par rapport au carter entre une position "normale" dans laquelle la deuxième découpe de la came est disposée au droit du deuxième évidement de ladite rainure et une position "réinitialisation" dans laquelle la première découpe de la came est disposée au droit du premier évidement de ladite rainure.

Ledit levier est de préférence associé à un actionneur simple effet actionné par de l'air comprimé provenant de l'actionneur principal ou par un ressort et permettant de le ramener dans sa position "normale".

De manière avantageuse, la dent du dispositif de rattrapage de jeu et les troisièmes dents de la crémaillère du dispositif d'amplification d'effort ont avantageusement un profil en forme globale de triangle rectangle avec une face perpendiculaire à l'axe longitudinal de ladite crémaillère.

Selon un mode de réalisation avantageux, le système de freinage comprend un dispositif de freinage manuel comportant au moins :
- un premier pignon monté pivotant sur le carter et entrainé en rotation par un organe de manœuvre manuel,
- un deuxième pignon monté pivotant sur le carter, entrainé en rotation par ledit premier pignon, et comportant un taraudage au centre de son moyeu,
- une vis coopérant à l'une de ses extrémités longitudinales avec le taraudage dudit deuxième pignon et étant solidaire par son autre extrémité longitudinale de la face du piston de l'actionneur principal située du côté opposé du ressort de rappel associé.

### Brève description des figures

D'autres avantages et caractéristiques ressortiront mieux de la description qui va suivre d'un mode d'exécution de l'invention, en référence à la figure annexée sur laquelle :
[Fig 1] est une vue schématique d'un système de freinage intégré conforme à l'invention,
[Fig 2] est une vue de détail partielle agrandie du système de freinage intégré de la figure 1.

### Description des modes de réalisation

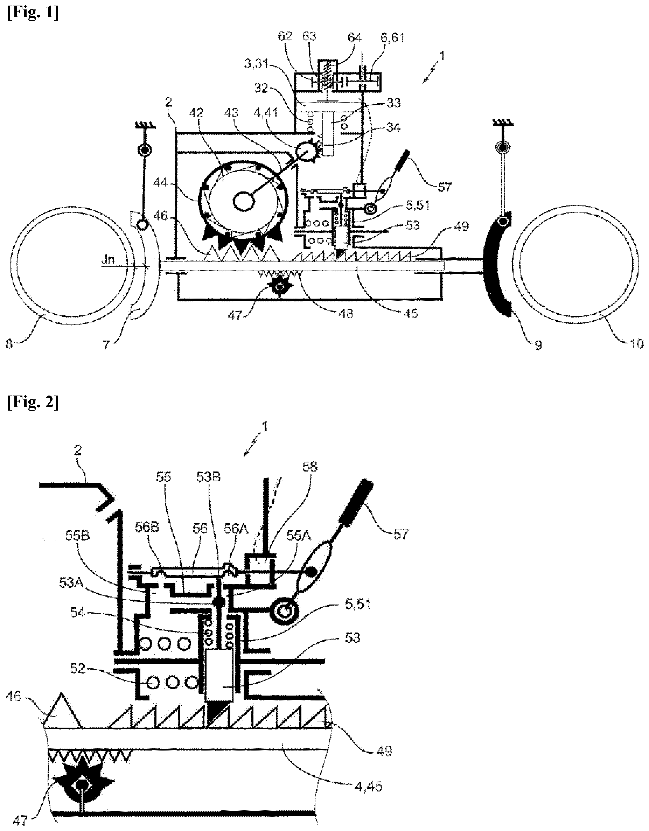

En référence aux figures 1 et 2, on a représenté, de façon schématique, un système de freinage 1 exclusivement mécanique destiné à être intégré à un bogie, non représenté, d'un wagon de transport de marchandises comportant au moins deux essieux.

On entend ici par "exclusivement mécanique" le fait que le système de freinage 1 selon l'invention n'a pas besoin d'énergie électrique pour fonctionner, c'est-à-dire notamment que ledit système de freinage 1 ne comporte aucun élément ou partie d'élément tel que, par exemple, des moteurs électriques ou encore des électroaimants ayant obligatoirement besoin d'énergie électrique pour leur fonctionnement.

Le système de freinage 1 intégré selon l'invention comprend un carter 2 mobile en translation par rapport audit bogie et contenant au moins en partie :
- un actionneur principal 3 simple effet actionné par de l'air comprimé provenant du wagon,
- un dispositif d'amplification d'effort 4,
- un dispositif de rattrapage de jeu 5,
- un dispositif de freinage manuel 6,
- un premier porte-semelle de frein 7 apte, lors du freinage, à venir en appui sur une roue 8 du premier essieu du bogie, et
- un deuxième porte-semelle de frein 9 apte, lors du freinage, à venir au contact d'une roue 10 du deuxième essieu du bogie lors du freinage disposée du même côté que la roue 8 d'un premier essieu du bogie,.

Ledit actionneur principal 3 comporte un piston 31 associé à un ressort de rappel 32 et une tige 33 solidaire dudit piston 31 et étant munie à son extrémité libre d'une crémaillère 34 entrainée en translation par ledit piston 31.

Ledit dispositif d'amplification d'effort 4 comprend au moins :
- un premier pignon 41 monté pivotant sur le carter 2, entrainé en rotation par ladite crémaillère 34 de l'actionneur 3 et entrainant en rotation une roue libre 42 par l'intermédiaire d'un axe 43,
- un deuxième pignon 44 monté pivotant sur le carter 2, entrainé en rotation par ladite roue libre 42 uniquement dans un seul sens de rotation, ledit deuxième pignon 44 étant de plus petites dimensions que le premier pignon 41,
- une crémaillère 45 entrainée en translation par ledit deuxième pignon 44 par l'intermédiaire d'une rangée de premières dents 46, et
- un troisième pignon 47 monté pivotant sur ledit carter 2 et entrainé en rotation par une rangée de deuxièmes dents 48 de ladite crémaillère 45, lesdites deuxièmes dents 48 s'entendant du côté opposé aux premières dents 46 de sorte à permettre un déplacement aisé de ladite crémaillère 45 et du carter 2.

On comprend bien que la présence du troisième pignon 47 du dispositif d'amplification d'effort 4 est une option avantageuse, car ledit troisième pignon 47 sert à faciliter le maintien en position et la translation de la crémaillère 45 et du carter 2.

Le premier porte-semelle de frein 7 est disposé à l'extérieur dudit carter 2 et solidaire de la crémaillère 45 du dispositif d'amplification d'effort 4, et le deuxième porte-semelle de frein 9 est solidaire dudit carter 2 du système de freinage 1 selon l'invention.

Selon un mode de réalisation avantageux, le système de freinage 1 selon l'invention comprend un dispositif de rattrapage de jeu 5, ce dernier comporte au moins :
- un chariot 51 mobile selon une direction parallèle à l'axe longitudinal de la crémaillère 45 du dispositif d'amplification d'effort 4 entre une position "normale", celle représentée sur les figures, dans laquelle le rattrapage du jeu dû à l'usure des semelles supportées par les porte-semelles de frein 7,9 et des roues 8,10 associées est inactif, et une position "rattrapage" dans laquelle le ledit rattrapage du jeu dû à l'usure est éventuellement actif, et associé à un premier ressort de rappel 52 tendant à ramener ledit chariot 51 dans la position "normale",
- une dent 53 solidaire dudit chariot 51, mobile selon une direction perpendiculaire à l'axe longitudinal de la crémaillère 45 du dispositif d'amplification d'effort 4 entre une position "sortie" dans laquelle elle sort au moins en partie dudit chariot 51 et une position "rentrée", et associé à un deuxième ressort de rappel 54 tendant à ramener ladite dent 53 dans la position "sortie", ladite dent 53 coopérant, en position "sortie", avec une rangée de troisièmes dents 49 de ladite crémaillère 45, lesdites troisièmes dents 49 s'entendant avantageusement du même côté que les premières dents 46 de la crémaillère 45 du dispositif d'amplification d'effort 4,
- une rainure 55 s'étendant parallèlement à l'axe longitudinal de la crémaillère 45 du dispositif d'amplification d'effort 4, recevant une portion 53A de la dent 53 située du côté opposé à ladite crémaillère 45 de manière à guider et maintenir en position "sortie" ladite dent 53 lors du déplacement du chariot 51, et comportant des premier et deuxième évidements 55A,55B disposés au droit de la position de la dent 53 lorsque le chariot 51 est respectivement dans sa position "normale" et sa position "rattrapage", lesdits premier et deuxième évidements 55A,55B autorisant le déplacement de la dent 53 de sa position "sortie" vers sa position "rentrée",
- une came 56 mobile par rapport au carter 2 selon une direction parallèle à l'axe longitudinal de la crémaillère 45 du dispositif d'amplification d'effort 4, comportant des première et deuxième découpes 56A,56B, et coopérant avec l'extrémité libre 53B de la dent 53 située du côté opposé à ladite crémaillère 45 de manière à autoriser le déplacement de la dent 53 de sa position "sortie" vers sa position "rentrée" lorsque le chariot 51 est respectivement dans sa position "normale" ou sa position "rattrapage" et que l'extrémité libre 53B de la dent 53 coopère avec la première 56A ou la deuxième découpe 56B de la came 56, et
- un levier 57 solidaire de ladite came 56 et mobile par rapport au carter 2 entre une position "normale" dans laquelle la deuxième découpe 56B de la came 56 est disposée au droit du deuxième évidement 55B de ladite rainure 55 et une position "réinitialisation" dans laquelle la première découpe 56A de la came 56 est disposée au droit du premier évidement 55A de ladite rainure 55, ledit levier 57 étant associé à un actionneur 58 simple effet actionné par de l'air comprimé provenant de l'actionneur principal 3 ou par un ressort et permettant de le ramener dans sa position "normale".

Ledit dispositif de freinage manuel 6 comporte au moins :
- un premier pignon 61 monté pivotant sur le carter 2 et entrainé en rotation par un organe de manœuvre manuel, non représenté, par exemple du type volant et disposé avantageusement sur le bogie,
- un deuxième pignon 62 monté pivotant sur le carter 2, entrainé en rotation par ledit premier pignon 61, et comportant un taraudage 63 au centre de son moyeu,
- une vis 64 coopérant à l'une de ses extrémités longitudinales avec le taraudage 63 dudit deuxième pignon 62 et étant solidaire par son autre extrémité longitudinale de la face du piston 31 de l'actionneur principal 3 située du côté opposé du ressort de rappel 32 associé.

On comprend bien que, même si les dispositifs de rattrapage de jeu 5 et de freinage manuel 6 sont intéressants, le système de freinage 1 selon l'invention pourra, dans une configuration minimaliste, fonctionner sans lesdits dispositifs de rattrapage de jeu 5 et de freinage manuel 6.

Avec cette configuration, le système de freinage 1 selon l'invention fonctionne de la manière décrite ci-après.

Tout d'abord, en l'absence d'usure, le jeu de fonctionnement Jn normal entre les porte-semelles de frein 7,9 et les roues 8,10 associées est classiquement d'environ 10 millimètres.

L'actionneur principal 3 n'étant pas actionné par de l'air comprimé provenant du wagon et le dispositif de rattrapage de jeu 5 du système de freinage 1 étant dans une configuration normale suivante : le chariot 51 dans sa position "normale", la dent 53 dans sa position "sortie", et le levier 57 dans sa position "normale" telle que la deuxième découpe 56B de la came 56 est disposée au droit du deuxième évidement 55B de ladite rainure 55, le fonctionnement du système de freinage 1 comporte alors les étapes suivantes :
- déplacement du piston 31 de l'actionneur principal 3 grâce à l'air comprimé provenant du wagon, ce qui a pour effet de comprimer le ressort 32 et de déplacer la crémaillère 34,
- entrainement en rotation du premier pignon 41 du dispositif d'amplification d'effort 4 par le déplacement de la crémaillère 34 de l'actionneur principal 3, ce qui a pour effet d'entrainer en rotation le deuxième pignon 44 par l'intermédiaire de l'axe 43 et de la roue libre 42,
- la rotation du deuxième pignon 44 entraine la crémaillère 45 dudit dispositif d'amplification d'effort 4 jusqu'à ce que le premier porte-semelle de frein 7 vienne en appui sur la roue 8 associée du premier essieu du bogie, la crémaillère 45 s'étant alors déplacée d'une distance correspondant au jeu de fonctionnement Jn,
- en se déplaçant, la crémaillère 45 entraine le chariot 51 grâce à la coopération de la dent 53 avec la rangée de troisièmes dents 49 de ladite crémaillère 45, car ladite dent 53 est maintenue en position "sortie" par la came 56 et/ou la rainure 55, l'ensemble chariot 51 - dent 53 étant alors également déplacé d'une distance correspondant au jeu de fonctionnement Jn,
- le premier porte-semelle de frein 7 étant en appui sur la roue 8 associée, le deuxième pignon 44 continue à tourner grâce à l'actionneur principal 3 et à coopérer avec la rangée de premières dents 46 de ladite crémaillère 45, ce qui a pour effet d'entrainer en translation le carter 2 et le deuxième porte-semelle de frein 9, jusqu'à ce que ledit deuxième porte-semelle de frein 9 vienne au contact de la roue 10 du deuxième essieu du bogie, à ce stade il y a une action de freinage du bogie, et le carter 2 et le deuxième porte-semelle de frein 9 se sont déplacés d'une distance correspondant au jeu de fonctionnement Jn,
- pour les mêmes raisons décrites précédemment, le déplacement du carter 2 a pour effet de déplacer l'ensemble chariot 51 - dent 53 une nouvelle fois d'une distance correspondant au jeu de fonctionnement Jn en comprimant d'autant le premier ressort de rappel 52 associé,
- à la fin de l'action de freinage, l'alimentation en air comprimé est stoppée, le piston 31 et la crémaillère 34 de l'actionneur principal 3 remontent sous l'action du ressort de rappel 32, ce qui a pour effet d'entrainer en rotation uniquement le premier pignon 41 et la roue libre 42 du dispositif d'amplification d'effort 4 dans le sens inverse, car dans ce sens la roue libre 42 débraye l'entrainement du deuxième pignon 44
- dans le même temps, le premier ressort de rappel 52 repousse l'ensemble chariot 51 - dent 53, ce qui a pour effet d'entrainer la crémaillère 45 du dispositif d'amplification d'effort 4 en sens inverse par l'intermédiaire de la dent 53, car cette dernière est maintenue en position "sortie" par la came 56 et/ou la rainure 55 - dans son déplacement inverse, la crémaillère 45 du dispositif d'amplification d'effort 4 entraine le premier porte-semelle de frein 7, le carter 2 et le deuxième porte-semelle de frein 9, le système de freinage revient dans sa configuration normale.

En présence d'usure des semelles supportées par les porte-semelles de frein 7,9 et/ou les roues 8,10 associées, le jeu de fonctionnement J entre les porte-semelles de frein 7,9 et les roues 8,10 associées est supérieur au jeu de fonctionnement Jn précédemment décrit et est, par exemple, égal à 15 millimètres.

L'actionneur principal 3 n'étant pas actionné par de l'air comprimé provenant du wagon et le dispositif de rattrapage de jeu 5 du système de freinage 1 étant dans la configuration normale décrite précédemment, le fonctionnement du système de freinage 1 comporte alors les étapes suivantes :
- déplacement du piston 31 de l'actionneur principal 3 grâce à l'air comprimé provenant du wagon, ce qui a pour effet de comprimer le ressort 32 et de déplacer la crémaillère 34,
- entrainement en rotation du premier pignon 41 du dispositif d'amplification d'effort 4 par le déplacement de la crémaillère 34 de l'actionneur principal 3, ce qui a pour effet d'entrainer en rotation le deuxième pignon 44 par l'intermédiaire de l'axe 43 et de la roue libre 42,
- la rotation du deuxième pignon 44 entraine la crémaillère 45 dudit dispositif d'amplification d'effort 4 jusqu'à ce que le premier porte-semelle de frein 7 vienne en appui sur la roue 8 associée du premier essieu du bogie, la crémaillère 45 s'étant alors déplacée d'une distance correspondant au jeu de fonctionnement J,
- pour les mêmes raisons décrites précédemment, la crémaillère 45 entraine, en se déplaçant, le chariot 51 sur une distance correspondant au jeu de fonctionnement J, or ledit chariot 51 a entre sa position "normale" et sa position "rattrapage" une course C égale, par exemple, de 20 millimètres, à cet instant il ne reste donc audit chariot 51 que 5 millimètres de déplacement possible,
- le premier porte-semelle de frein 7 étant en appui sur la roue 8 associée, le deuxième pignon 44 continue à tourner grâce à l'actionneur principal 3 et à coopérer avec la rangée de premières dents 46 de ladite crémaillère 45, ce qui a pour effet d'entrainer en translation le carter 2 et le deuxième porte-semelle de frein 9 et, pour les mêmes raisons décrites précédemment, de déplacer l'ensemble chariot 51 - dent 53 et cela jusqu'à ce qu'il vienne dans sa position "rattrapage",
- à ce stade, le premier ressort de rappel 52 associé au chariot 51 est comprimé d'une valeur correspondant à la course C dudit chariot 51, il reste encore une distance égale à 2xJ-C (soit 10 millimètres dans l'exemple décrit) entre le deuxième porte-semelle de frein 9 et la roue 10 associée, et la dent 53 peut se déplacer de sa position "sortie" vers sa position "rentrée" car elle est disposée au droit du deuxième évidement 55B de la rainure 55 et de la deuxième découpe 56B de la came 56,
- le deuxième pignon 44 continuant à tourner grâce à l'actionneur principal 3 et à coopérer avec la rangée de premières dents 46 de ladite crémaillère 45, le carter 2 et le deuxième porte-semelle de frein 9 se déplacent en faisant fait "sauter" la dent 53 jusqu'à ce que ledit deuxième porte-semelle de frein 9 vienne au contact de la roue 10 du deuxième essieu du bogie, à ce stade il y a une action de freinage du bogie,
- arrêt de l'alimentation en air comprimé à la fin de l'action de freinage, le piston 31 et la crémaillère 34 de l'actionneur principal 3 remontent alors sous l'action du ressort de rappel 32, ce qui a pour effet d'entrainer en rotation uniquement le premier pignon 41 et la roue libre 42 du dispositif d'amplification d'effort 4 dans le sens inverse, car dans ce sens la roue libre 42 débraye l'entrainement du deuxième pignon 44,
- dans le même temps, le premier ressort de rappel 52 repousse l'ensemble chariot 51 - dent 53, ce qui a pour effet d'entrainer la crémaillère 45 du dispositif d'amplification d'effort 4 en sens inverse par l'intermédiaire de la dent 53, car cette dernière est maintenue en position "sortie" par la came 56 et/ou la rainure 55
- dans son déplacement inverse, la crémaillère 45 du dispositif d'amplification d'effort 4 entraine le premier porte-semelle de frein 7, le carter 2 et le deuxième porte-semelle de frein 9, le système de freinage revient dans sa configuration normale.

On comprend bien que le carter 2 et la crémaillère 45 du dispositif d'amplification d'effort 4 se sont déplacés de 2xJ (soit 30 millimètres dans l'exemple décrit) alors que le chariot 51 du dispositif de rattrapage de jeu 5 ne s'est déplacé que de la course C (soit 20 millimètres dans l'exemple décrit), ledit dispositif de rattrapage de jeu 5 du système de freinage 1 a donc permis de rattraper un jeu de 10 millimètres et se retrouve dans sa configuration normale avec un jeu de fonctionnement entre les porte-semelles de frein 7,9 et les roues 8,10 associées égal au jeu de fonctionnement Jn normal.

Lorsque l'usure des semelles supportées par les porte-semelles de frein 7,9 et/ou les roues 8,10 associées est trop importante, il faut un changement d'essieux et/ou des semelles de frein et procéder à une réinitialisation du dispositif de rattrapage de jeu 5 du système de freinage 1.

Pour cela, on procède selon les étapes suivantes :
- action manuelle sur le levier 57 du dispositif de rattrapage de jeu 5 pour le placer dans sa position "réinitialisation" et déplacer la came 56 de sorte que sa première découpe 56A soit disposée au droit du premier évidement 55A de la rainure 55, ce qui permet à la dent 53 de pouvoir se déplacer de sa position "sortie" vers sa position "rentrée",
- rotation du troisième pignon 47 du dispositif d'amplification d'effort 4 qui permet de rapprocher l'ensemble crémaillère 45 - premier porte-semelle de frein 7 de l'ensemble carter 2 - deuxième porte-semelle de frein 9,
- repositionnement du levier 57 du dispositif de rattrapage de jeu 5 pour le placer dans sa position "normale" grâce à l'actionneur 58 et de l'air comprimé provenant de l'actionneur principal 3 ou d'un ressort, ce qui a pour effet de déplacer la came 56 de sorte que sa deuxième découpe 56B soit disposée au droit du deuxième évidement 55B de la rainure 55, ce qui bloque la dent 53 dans sa position "sortie" et en prise avec la rangée de troisièmes dents 49 de ladite crémaillère 45, à ce stade le dispositif de rattrapage de jeu 5 du système de freinage 1 est réinitialisé.

Enfin, en cas d'absence d'air comprimé provenant du wagon, le système de freinage 1 permet un freinage manuel grâce à son dispositif de freinage manuel 6.

Pour freiner de façon manuelle, on procède selon les étapes suivantes :
- rotation du premier pignon 61 à l'aide de l'organe de manœuvre manuel, ce qui a pour effet d'entrainer en rotation le deuxième pignon 62,
- déplacement de la vis 64 selon son axe longitudinal grâce à la rotation du taraudage 63 dudit deuxième pignon 62, ce qui a pour effet de déplacer le piston 31 de l'actionneur principal 3 et de comprimer le ressort de rappel 32 associé,
- les étapes suivantes sont identiques à celles des modes de fonctionnement avec ou sans usure décrits précédemment.

Par ailleurs on comprend bien que la dent 53 du dispositif de rattrapage de jeu 5 et les troisièmes dents 49 de la crémaillère 45 du dispositif d'amplification d'effort 4 ont avantageusement un profil en forme globale de triangle rectangle avec une face perpendiculaire à l'axe longitudinal de ladite crémaillère 45.

Enfin, on comprend bien que le système de freinage (1) et son dispositif de rattrapage de jeu 5 n'utilisent que des éléments mécaniques ou pneumatiques tels que, par exemple, des pistons, des crémaillères, des leviers, des pignons ou encore des roues, et qu'aucun de ces éléments n'a besoin d'énergie électrique pour fonctionner.

Le système de freinage (1) intégré conforme à l'invention trouve une application particulière pour les bogies destinés aux wagons de transport de marchandises. Toutefois, il est évident que le système de freinage (1) intégré peut être incorporé à tout autre type connu de bogie.

Enfin, il va de soi que les exemples de système de freinage (1) intégré conformes à l'invention qui viennent d'être décrits ne sont que des illustrations particulières, en aucun cas limitatives de l'invention.

## Revendications

1. Système de freinage (1) intégré à un bogie d'un wagon de transport de marchandises comportant au moins deux essieux **caractérisé en ce qu'**il est exclusivement mécanique et comporte un carter (2) mobile en translation et contenant au moins en partie :
- un actionneur principal (3) simple effet actionné par de l'air comprimé et comportant un piston (31) associé à un ressort de rappel (32) et entrainant en translation une crémaillère (34),
- un dispositif d'amplification d'effort (4),
- un premier porte-semelle de frein (7) apte, lors du freinage, à venir en appui sur une roue (8) du premier essieu du bogie, et
- un deuxième porte-semelle de frein (9) apte, lors du freinage, à venir au contact d'une roue (10) du deuxième essieu du bogie disposée du même côté que la roue (8) dudit premier essieu, ledit dispositif d'amplification d'effort (4) comprenant au moins :
- un premier pignon (41) monté pivotant sur le carter (2), entrainé en rotation par la crémaillère (34) dudit actionneur principal (3) et entrainant en rotation une roue libre (42),
- un deuxième pignon (44) monté pivotant sur le carter (2), entrainé en rotation par ladite roue libre (42) uniquement dans un seul sens de rotation, et
- une crémaillère (45) entrainée en translation par ledit deuxième pignon (44) par l'intermédiaire d'une rangée de premières dents (46).

2. Système de freinage (1) selon la revendication 1 **caractérisé en ce que** le dispositif d'amplification d'effort (4) comporte un troisième pignon (47) monté pivotant sur ledit carter (2) et entrainé en rotation par une rangée de deuxièmes dents (48) de ladite crémaillère (45), le premier porte-semelle de frein (7) étant disposé à l'extérieur dudit carter (2) et solidaire de la crémaillère (45) du dispositif d'amplification d'effort (4), et ledit deuxième porte-semelle de frein (9) étant solidaire à l'extérieur dudit carter (2).

3. Système de freinage (1) selon l'une quelconque des revendications 1 ou 2 **caractérisé en ce que** ledit deuxième pignon (44) du dispositif d'amplification d'effort (4) est de plus petites dimensions que le premier pignon (41).

4. Système de freinage (1) selon l'une quelconque des revendications 1 à 3 **caractérisé en ce qu'**il comprend un dispositif de rattrapage de jeu (5) comportant au moins :
- un chariot (51) mobile selon une direction parallèle à l'axe longitudinal de la crémaillère (45) du dispositif d'amplification d'effort (4) entre une position "normale" et une position "rattrapage", et étant associé à un premier ressort de rappel (52) tendant à ramener ledit chariot (51) dans la position "normale",
- une dent (53) solidaire dudit chariot (51), mobile selon une direction perpendiculaire à l'axe longitudinal de la crémaillère (45) du dispositif d'amplification d'effort (4) entre une position "sortie" dans laquelle elle sort au moins en partie dudit chariot (51) et une position "rentrée", et étant associé à un deuxième ressort de rappel (54) tendant à ramener ladite dent (53) dans la position "sortie", ladite dent (53) coopérant avec une rangée de troisièmes dents (49) de ladite crémaillère (45),
- une rainure (55) s'étendant parallèlement à l'axe longitudinal de la crémaillère (45) du dispositif d'amplification d'effort (4), recevant une portion (53A) de la dent (53) située du côté opposé à ladite crémaillère (45) de manière à guider et maintenir en position "sortie" ladite dent (53) lors du déplacement du chariot (51), et comportant des premier et deuxième évidements (55A,55B) disposés au droit de la position de la dent (53) lorsque le chariot (51) est respectivement dans sa position "normale" et sa position "rattrapage", lesdits premier et deuxième évidements (55A,55B) autorisant le déplacement de la dent (53) de sa position "sortie" vers sa position "rentrée",
- une came (56) mobile par rapport au carter (2) selon une direction parallèle à l'axe longitudinal de la crémaillère (45) du dispositif d'amplification d'effort (4), comportant des première et deuxième découpes (56A,56B), et coopérant avec l'extrémité libre (53B) de la dent (53) située du côté opposé à ladite crémaillère (45) de manière à autoriser le déplacement de la dent (53) de sa position "sortie" vers sa position "rentrée" lorsque le chariot (51) est respectivement dans sa position "normale" ou sa position "rattrapage" et que l'extrémité libre (53B) de la dent (53) coopère avec la première (56A) ou la deuxième découpe (56B) de la came (56), et
- un levier (57) solidaire de ladite came (56) et mobile par rapport au carter (2) entre une position "normale" dans laquelle la deuxième découpe (56B) de la came (56) est disposée au droit du deuxième évidement (55B) de ladite rainure (55) et une position "réinitialisation" dans laquelle la première découpe (56A) de la came (56) est disposée au droit du premier évidement (55A) de ladite rainure (55).

5. Système de freinage (1) selon la revendication 4 **caractérisé en ce que** ledit levier (57) est associé à un actionneur (58) simple effet actionné par de l'air comprimé provenant de l'actionneur principal (3) ou par un ressort et permettant de le ramener dans sa position "normale".

6. Système de freinage (1) selon l'une quelconque des revendications 4 ou 5 **caractérisé en ce que** la dent (53) du dispositif de rattrapage de jeu (5) et les troisièmes dents (49) de la crémaillère (45) du dispositif d'amplification d'effort (4) ont avantageusement un profil en forme globale de triangle rectangle avec une face perpendiculaire à l'axe longitudinal de ladite crémaillère (45).

7. Système de freinage (1) selon l'une quelconque des revendications 1 à 6 **caractérisé en ce qu'**il comprend un dispositif de freinage manuel (6) comportant au moins :
- un premier pignon (61) monté pivotant sur le carter (2) et entrainé en rotation par un organe de manœuvre manuel,
- un deuxième pignon (62) monté pivotant sur le carter (2), entrainé en rotation par ledit premier pignon (61), et comportant un taraudage (63) au centre de son moyeu,
- une vis (64) coopérant à l'une de ses extrémités longitudinales avec le taraudage (63) dudit deuxième pignon (62) et étant solidaire par son autre extrémité longitudinale de la face du piston (31) de l'actionneur principal (3) située du côté opposé du ressort de rappel (32) associé.
